# EUROPÄISCHE PATENTANMELDUNG

(11) **EP 4 391 134 A2**
(43) Veröffentlichungstag der Anmeldung: **26.06.2024**
(21) Anmeldenummer: 23215910.3
(22) Anmeldetag: 12.12.2023
(51) Int. Cl.: H01M 10/0525, H01M 10/0585, H01M 10/613, H01M 10/647, H01M 10/654, H01M 50/54, H01M 50/548

(54) **BATTERIE MIT OPTIMIERTER TEMPERIERBARKEIT**

(30) Priorität: 20.12.2022 DE 102022134057
(71) Anmelder: VOLKSWAGEN AG, 38440 Wolfsburg (DE)
(72) Erfinder: Bedürftig, Benjamin, 89077 Ulm (DE); Schaar, Bastian, 38116 Braunschweig (DE); Gaush, Anish, 38268 Lengede (DE); Czech, Marvin, 38106 Braunschweig (DE); Yurtseven, Mesut, 38226 Salzgitter (DE); von Aspern, Natascha, 38102 Braunschweig (DE)
(74) Vertreter: Bungartz, Florian

(57) **Zusammenfassung**

Eine Batterie (1) mit einer Umhüllung und mit einem innerhalb der Umhüllung angeordneten Stapel (4) mit mehreren ersten Elektroden (5a) und mehreren zweiten Elektroden (5b), die in dem Stapel (4) unter Zwischenanordnung jeweils eines Separators (6) wechselweise angeordnet sind, wobei die ersten Elektroden (5a) mit einem ersten Batteriepol (12a), der in die Umhüllung integriert ist, elektrisch verbunden sind und die zweiten Elektroden (5b) mit einem zweiten Batteriepol (12b), der in die Umhüllung integriert ist, elektrisch verbunden sind und wobei die Elektroden (5) jeweils ein elektrisch leitfähiges Substrat (7) und an mindestens einer Seite des Substrats (7) eine Aktivmaterialschicht (8) aufweisen, ist dadurch gekennzeichnet, dass die Substrate (7) der ersten Elektroden (5a) und/oder der zweiten Elektroden (5b) an mindestens einer Seite der jeweils mindestens einen zugehörigen Aktivmaterialschicht (8) einen Querüberstand (9a) ausbilden, wobei die Querüberstände (9a) der Substrate (7) der ersten Elektroden (5a) und/oder die Querüberstände (9a) der Substrate (7) der zweiten Elektroden (5b) mit einem thermisch leitfähigen Leitelement (10) verbunden sind, wobei das mindestens eine Leitelement (10) die Umhüllung kontaktiert und/oder einen Abschnitt davon ausbildet.

## Beschreibung

Die Erfindung betrifft eine Batterie, insbesondere eine als Traktionsbatterie eines Kraftfahrzeugs vorgesehene Batterie, mittels der elektrische Energie für einen Betrieb eines elektrischen Traktionsmotors des Kraftfahrzeugs bereitgestellt werden kann.

Eine Batterie ist ein Speicher für elektrische Energie auf elektrochemischer Basis, bei deren Entladung gespeicherte chemische Energie durch eine elektrochemische Redoxreaktion in elektrische Energie gewandelt wird. Im Kontext der Erfindung werden als Batterien sowohl sogenannte Primärbatterien, die nur für ein einmaliges Entladen und nicht für ein erneutes Laden vorgesehen sind, als auch sogenannte Sekundärbatterien beziehungsweise Akkumulatoren, die für ein mehrfaches Laden vorgesehen und entsprechend ausgelegt sind, verstanden. Ein Laden einer Sekundärbatterie stellt dabei die elektrolytische Umkehrung der bei der Entladung ablaufenden elektrochemischen Redoxreaktion dar, die durch das Anlegen einer elektrischen Spannung realisiert wird.

Eine Batterie umfasst eine oder, üblicherweise, mehrere Batterieelemente, die innerhalb einer Umhüllung, üblicherweise in Form einer häufig als "Pouch" bezeichneten Folienumhüllung oder eines Gehäuses, angeordnet sind. Die Batterieelemente umfassen jeweils zwei Elektroden, einen zwischen den Elektroden angeordneten Separator zur elektrischen Separierung der Elektroden und einen als lonenleiter dienenden Elektrolyten. Die zwei Elektroden eines Batterieelements unterschieden sich hinsichtlich eines jeweils umfassten Aktivmaterials, wodurch eine der Elektroden anodisch und die andere kathodisch wirksam ist (jeweils bezogen auf ein Entladen der Batteriezelle). Weiterhin umfasst eine Batterie üblicherweise zwei Batteriepole, die in die Umhüllung integriert sind und die innenseitig der Umhüllung mit den Elektroden elektrisch leitend verbunden sind. Dabei können alle anodisch wirksamen Elektroden mit einem der Batteriepole und alle kathodisch wirksamen Elektroden mit dem anderen der Batteriepole verbunden sein.

Eine Ausgestaltung einer Batterie mit einem Gehäuse kann den Vorteil einer im Vergleich zu Batterien mit einer Folienumhüllung höheren strukturellen Belastbarkeit der Batterie aufweisen.

Batterien und insbesondere die als Traktionsbatterien in Kraftfahrzeugen derzeit hauptsächlich genutzten Lithium-Ionen-Batterien sollten in einem definierten Temperaturbereich gelagert und insbesondere betrieben, d.h. geladen und entladen werden, um Leistungsdefizite, Beschädigungen und/oder eine beschleunigte Alterung zu vermeiden. Ein Überschreiten des Temperaturbereichs muss dabei nicht ausschließlich auf einer Temperaturangleichung mit einer entsprechend hohen Umgebungstemperatur beruhen; vielmehr erzeugen Batterien bei einem Laden oder Entladen einer Batterie in erheblichem Maße Abwärme, die zu einer Eigenerwärmung führt. Es kann daher sinnvoll sein, Batterien zu temperieren, um ein Unter- oder Überschreiten des Temperaturbereichs zu vermeiden. Bei Traktionsbatterien von Kraftfahrzeugen erfolgt eine solche Temperierung üblicherweise mittels einer Integration der Traktionsbatterien in ein Kühlsystem des Kraftfahrzeugs, durch das Wärmeenergie über eine Temperierflüssigkeit auf die Traktionsbatterien übertragen oder von diesen abgeführt werden kann. Dabei werden üblicherweise Umhüllungen beziehungsweise Gehäuse einzelner Batterien oder Batteriemodule, die verschaltet zu einem sogenannten Batteriestack eine Traktionsbatterie ausbilden, temperiert. Innerhalb der Umhüllungen sind jedoch üblicherweise eine Vielzahl einzelner Batteriezellen in einem Stapel angeordnet. Daraus folgt, dass eine Temperierung über die Umhüllung wirksamer für relativ nah an der Umhüllung gelegene Elemente des Stapels ist und die Temperierwirkung zu dem Zentrum innerhalb der Umhüllung hin deutlich abnimmt.

Die US 6,858,344 B2 offenbart eine Batterie mit einem quaderförmigen Gehäuse aus Kunststoff, in dessen Großseiten metallische Bleche eingebettet sind, wobei jeweils ein Kontaktabschnitt dieser Bleche aus dem Gehäuse ragt und für einen Kontakt mit einem von einem Kühlmittel durchströmten Kühlelement vorgesehen sind. Durch die Integration der Bleche in das Gehäuse soll eine bessere Wärmeleitung über das Gehäuse realisiert sein.

Die US 10,686,170 B2 beschreibt eine gestapelte Anordnung von Batterien mit Folienumhüllungen in einem Gehäuse, wobei die Folienumhüllungen an zumindest zwei Seiten mit jeweils einem leistenförmigen Halteelement verbunden sind, wobei die Halteelemente eine sichere Aufnahme der gestapelte Batterien in einem Gehäuse ermöglichen sollen.

Die US 6,709,783 B2 offenbart einen Batteriestack mit mehreren gestapelten Batterien, wobei zwischen den Batterien Kühlelemente angeordnet sind, die eine Mehrzahl von Kühlkanälen für eine Durchströmung mit einem Kühlmedium ausbilden.

Der Erfindung liegt die Aufgabe zugrunde, eine möglichst vorteilhafte Temperierung einer Batterie zu realisieren.

Diese Aufgabe ist bei einer Batterie gemäß dem Patentanspruch 1 gelöst. Bevorzugte Ausgestaltungsformen einer solchen Batterie sind Gegenstände der weiteren Patentansprüche und/oder ergeben sich aus der nachfolgenden Beschreibung der Erfindung.

Erfindungsgemäß ist eine Batterie, insbesondere eine Traktionsbatterie für ein Kraftfahrzeug und/oder eine Lithium-Ionen-Batterie, mit einer vorzugsweise quaderförmigen Umhüllung und mit einem innerhalb der Umhüllung angeordneten Stapel mit mehreren ersten Elektroden und mehreren zweiten Elektroden, die in dem Stapel unter Zwischenanordnung jeweils eines Separators wechselweise angeordnet sind, vorgesehen. Die Umhüllung umgibt den Stapel mit den Elektroden und Separatoren vorzugsweise vollumfänglich und diese ist weiterhin bevorzugt (in einem gebrauchsfähigen Zustand) gasdicht ausgestaltet.

Die ersten Elektroden sind mit einem ersten Batteriepol, der in die Umhüllung, vorzugsweise in eine erste Stirnseite der Umhüllung integriert ist, elektrisch leitfähig verbunden und die zweiten Elektroden sind mit einem zweiten Batteriepol, der ebenfalls in die Umhüllung, vorzugsweise in eine zweite Stirnseite der Umhüllung integriert ist, elektrisch verbunden. Die Elektroden weisen jeweils ein elektrisch leitfähiges, insbesondere als Folie ausgestaltetes Substrat und auf mindestens einer Seite des Substrats eine vorzugsweise prismatische, besonders bevorzugt quaderförmige Aktivmaterialschicht auf. Die Aktivmaterialschicht kann dabei eine im Vergleich zu einer Länge und Breite sehr kleine Höhe (Schichtdicke) aufweisen. Bei der der bevorzugt vorgesehenen quaderförmigen Aktivmaterialschichten kann sich auch für den Stapel (im Wesentlichen) eine Quaderform ergeben. Dazu können die Separatoren ebenfalls quaderförmig ausgestaltet sein, wobei deren Großseiten vorzugsweise etwas größer als die Großseiten der Aktivmaterialschichten sind, zwischen denen die Separatoren separierend angeordnet sind. Die elektrischen Verbindungen zwischen den Elektroden und den Batteriepolen und auch die Substrate dienen jeweils einer möglichst widerstandsarmen Stromleitung und sind demnach vorzugsweise derart ausgestaltet, dass diese einen möglichst geringen spezifischen Widerstand (z.B. von max. 1'Ω*mm²/m bei 20°C) aufweisen. Die Substrate der ersten Elektroden und/oder der zweiten Elektroden bilden an mindestens einer Seite, insbesondere einer Längsseite der jeweils zugehörigen Aktivmaterialschicht einen Querüberstand aus, d.h. diese ragen in Querrichtung beziehungsweise entlang der Breite über die Abmessungen der jeweiligen Aktivmaterialschicht hinaus. Die Querüberstände der Substrate (nur) der ersten Elektroden (d.h. nicht auch der zweiten Elektroden) und/oder die Querüberstände der Substrate (nur) der zweiten Elektroden (d.h. nicht auch der ersten Elektroden) sind (ggf. jeweils) mit einem zumindest thermisch leitfähigen Leitelement verbunden, wobei das mindestens eine Leitelement die Umhüllung kontaktiert und/oder einen Abschnitt davon ausbildet beziehungsweise in dieses integriert ist. Als thermisch leitfähig gilt beispielsweise eine Wärmeleitfähigkeit von mindestens 5 W/(m·K), wobei vorzugsweise eine Wärmeleitfähigkeit des Leitelements von mindestens 50 W/(m·K) oder mindestens 100 W/(m·K) oder mindestens 200 W/(m·K) realisiert ist (jeweils bei 20°C und 50% Luftfeuchte). Metalle und insbesondere Aluminium, aus denen/dem das zumindest eine Leitelement vorzugsweise zumindest teilweise ausgestaltet ist, gelten im Sinne der Erfindung grundsätzlich als thermisch leitfähig.

Ein Quader und damit auch eine quaderförmige Umhüllung sowie eine quaderförmige Aktivmaterialschicht weist eine Länge, Breite und Höhe auf, wobei erfindungsgemäß die Länge die größte, die Breite die mittlere und die Höhe die kleinste der (Kanten-)Abmessungen ist (sofern, wie es vorzugsweise vorgesehen ist, entsprechende Unterschiede vorliegen). Ein Quader umfasst dann zwei Großseiten, die durch die Länge und die Breite aufgespannt sind, zwei Längsseiten, die durch die Länge und die Höhe aufgespannt werden, sowie zwei Stirnseiten, die durch die Breite und die Höhe aufgespannt sind. Als Quader kann erfindungsgemäß auch eine solche Form gelten, die aufgrund von herstellungsbedingten Abweichungen nicht exakt einem geometrischen Quader entspricht.

Eine erfindungsgemäße Batterie zeichnet sich durch eine gute Temperierbarkeit über das mindestens eine Leitelement, das bei der bevorzugt vorgesehenen Anordnung an den Längsseiten der Aktivmaterialschichten und damit auch an der Längsseite des Stapels mit den Elektroden und Separatoren insgesamt relativ großflächig ausgestaltet sein kann, aus. Die relativ gute Temperierbarkeit kann sich vorteilhaft hinsichtlich der Leistungsfähigkeit und/oder der Lebensdauer der Batterie auswirken. Weiterhin ermöglicht diese eine kompakte Bauweise der Batterie.

Die Umhüllung kann vorzugsweise als formstabiles Gehäuse ausgestaltet sein. Als "formstabil" gilt ein Gehäuse, wenn dessen dreidimensionale Form ohne externe Belastung infolge der eigenen Gewichtskraft nicht kollabiert. Vorzugsweise kann ein solches Gehäuse derart formstabil ausgestaltet sein, dass dieses bei einer Belastung durch externe Kräfte, die bei einer normalen Nutzung auftreten, nicht kollabiert und, besonders bevorzugt, auch nicht in einem relevanten Maße deformiert wird ("starres" Gehäuse). Das Gehäuse kann weiterhin bevorzugt vollständig oder teilweise aus Metall, beispielsweise Aluminium, ausgestaltet sein, wodurch relativ einfach und kostengünstig eines formstabiles und zudem gut thermisch leitendes Gehäuse realisiert sein kann.

Gemäß einer bevorzugten Ausgestaltungsform einer erfindungsgemäßen Batterie kann vorgesehen sein, dass das mindestens eine Leitelement elektrisch mit einem zugehörigen der Batteriepole verbunden ist. Auch diese Verbindung dient einer möglichst widerstandsarmen Stromleitung und ist daher vorzugsweise derart ausgestaltet, dass diese einen möglichst geringen spezifischen Widerstand (z.B. von max. 1'Ω*mm²/m bei 20°C) bewirkt. Diese Ausgestaltungsform einer erfindungsgemäßen Batterie kann insbesondere Vorteile hinsichtlich der Herstellbarkeit der Batterie und konkret der Herstellbarkeit der Elektroden aufweisen. Dies gilt insbesondere dann, wenn, wie dies vorzugsweise vorgesehen ist, das entsprechende Leitelement den zugehörigen Batteriepol integriert. Die vorgesehene Integration des Batteriepols in die Umhüllung ergibt sich dann im Rahmen einer Montage der Batterie. Dazu kann vorgesehen sein kann, dass eine Baugruppe, die einerseits den Stapel mit den Elektroden und Separatoren und gegebenenfalls weitere Komponenten, wie beispielsweise mindestens ein Deformationselement, sowie andererseits das mindestens eine Leitelement umfasst, in ein Grundgehäuse einer als Gehäuse ausgestalteten Umhüllung eingebracht wird. Dabei kann das mindestens eine Leitelement bereits mit den zugehörigen Elektroden verbunden sein. Für das Einbringen der Baugruppe kann das Grundgehäuse eine entsprechende Einführöffnung aufweisen. Diese Einführöffnung kann anschließend mittels eines Gehäusedeckels verschlossen werden. Eine Integration des Batteriepols in das Gehäuse kann dann vorzugsweise dadurch erreicht werden, dass nach dem Montieren des Gehäusedeckels der Batteriepol durch eine Durchgangsöffnung des Gehäusedeckels ragt.

Gemäß einer bevorzugten Ausgestaltungsform einer erfindungsgemäßen Batterie, bei der das mindestens eine Leitelement elektrisch mit einem zugehörigen der Batteriepole verbunden ist, kann weiterhin vorgesehen sein, dass das mindestens eine Leitelement ein erstes Teilelement, das mit dem zugehörigen Batteriepol elektrisch verbunden ist, und ein zumindest abschnittsweise elektrisch isolierendes zweites Teilelement, das einen Abstand zwischen dem ersten Teilelement und der Umhüllung überbrückt, umfasst. Als elektrisch isolierend gilt eine Komponente, wenn über diese ein relevanter Stromfluss trotz eines anliegenden elektrischen Potentialunterschieds verhindert ist. Dadurch kann eine elektrische Verbindung zwischen dem Leitelement und konkret dem elektrisch leitfähigen ersten Teilelement davon einerseits und der Umhüllung andererseits verhindert werden, obwohl das Leitelement elektrisch mit dem zugehörigen Batteriepol verbunden ist. Dies kann sich vorteilhaft hinsichtlich der Sicherheit bei der Nutzung einer solchen Batterie auswirken. Über das zweite Teilelement kann dennoch eine vorteilhafte Abfuhr von Wärmeenergie von dem Stapel mit den Elektroden und Separatoren auf beziehungsweise über die Umhüllung realisiert werden.

Vorzugsweise kann vorgesehen sein, dass das Leitelement abschnittsweise in einer Durchgangsöffnung der Umhüllung angeordnet ist. Dadurch kann eine besonders gute Temperierung für den Stapel mit den Elektroden und Separatoren realisiert werden, weil ein direkter Wärmetausch zwischen dem Leitelement und der Umgebung realisiert werden kann. Besonders bevorzugt kann dann noch vorgesehen sein, dass das Leitelement einen in der Durchgangsöffnung der Umhüllung angeordneten, die Umhüllung vorzugsweise nicht kontaktierenden ersten Abschnitt und einen die Umhüllung innenseitig kontaktierenden, elektrisch isolierenden oder hochohmig ausgestalteten und/oder gegen einen Gasdurchtritt abdichtenden zweiten Abschnitt umfasst. Dies ermöglicht, den ersten Abschnitt aus einem thermisch leitfähigen Material, das häufig auch elektrisch leitfähig ist, und insbesondere einem Metall, vorzugsweise Aluminium, auszugestalten, wobei eine (niederohmige) elektrische Verbindung zwischen diesem ersten Abschnitt und der Umhüllung vermieden werden kann. Gleichzeitig kann der zweite Abschnitt des Leitelements für eine ausreichende Abdichtung der Umhüllung im Bereich der Durchgangsöffnung und/oder eine ausreichende Abstützung des Leitelements an der Umhüllung sorgen.

Gemäß einer bevorzugten Ausgestaltungsform einer erfindungsgemäßen Batterie kann vorgesehen sein, dass die Substrate der ersten Elektroden an einer Seite, vorzugsweise einer Stirnseite der jeweils zugehörigen (vorzugsweise quaderförmigen) Aktivmaterialschicht einen Längsüberstand ausbilden (d.h. diese ragen in einer Längsrichtung über die Abmessungen der jeweiligen Aktivmaterialschicht hinaus), wobei die Längsüberstände der Substrate (nur) der ersten Elektroden mit dem ersten Batteriepol verbunden sind. Alternativ oder ergänzend können auch die Substrate der zweiten Elektroden an einer Seite, vorzugsweise einer Stirnseite der jeweils zugehörigen (vorzugsweise quaderförmigen) Aktivmaterialschicht einen Längsüberstand ausbilden, wobei die Längsüberstände der Substrate (nur) der zweiten Elektroden mit dem zweiten Batteriepol verbunden sind. Eine elektrische Verbindung zwischen den Elektroden und dem jeweils zugehörigen Batteriepol kann folglich auch direkt, d.h. nicht über das mindestens eine Leitelement realisiert sein. Dadurch kann gegebenenfalls eine vorteilhafte konstruktive Ausgestaltung des mindestens einen Leitelements realisiert sein.

Bei einer erfindungsgemäßen Batterie, die sich durch eine besonders einfache konstruktive Ausgestaltung auszeichnen kann, kann vorgesehen sein, dass die Substrate der ersten Elektroden an zwei Längsseiten der zugehörigen Aktivmaterialschichten einen Querüberstand ausbilden, wobei diese beidseitigen Querüberstände jeweils mit dem Leitelement oder mit jeweils einem Leitelement verbunden sind. Die Substrate der zweiten Elektroden können dagegen jeweils einen Längsüberstand ausbilden und direkt mit dem zweiten Batteriepol verbunden sein. Besonders bevorzugt kann dabei (und auch grundsätzlich) noch vorgesehen sein, dass die ersten Elektroden ein kathodisch wirksames Aktivmaterial und/oder ein Substrat aus Aluminium aufweisen. Die zweiten Elektroden können dagegen ein anodisch wirksames Aktivmaterial und/oder ein Substrat aus Kupfer oder Aluminium aufweisen.

Das mindestens eine Leitelement einer erfindungsgemäßen Batterie kann vorzugsweise starr ausgestaltet ist. Als "starr" gilt das mindestens eine Leitelement, wenn sich dieses bei den Belastungen, die darauf im Rahmen einer vorgesehenen Nutzung wirken, nicht in einem relevanten (d.h. erkennbaren und die Funktion beeinflussenden) Maße verformt. Dadurch kann das Leitelement die Stabilität des Stapels der Elektroden und Separatoren beziehungsweise einer diese Komponenten umfassenden Baugruppe vorteilhaft beeinflussen. Dies kann sich insbesondere im Rahmen der Montage einer erfindungsgemäßen Batterie vorteilhaft auswirken.

Aus demselben Grund kann vorgesehen sein, dass das mindestens eine Leitelement eine zugeordnete Seite, insbesondere Längsseite des Stapels zu mindestens 50% oder mindestens 75% überdeckt.

Insbesondere bei einer solchen relativ großflächigen Ausgestaltung des mindestens einen Leitelements kann weiterhin bevorzugt vorgesehen sein, dass dieses mindestens eine Durchgangsöffnung aufweist. Dies kann sich einerseits vorteilhaft hinsichtlich einer möglichst geringen Masse des Leitelements und damit der Masse der Batterie insgesamt auswirken. Zudem kann sich eine solche Durchgangsöffnung vorteilhaft bezüglich einer Verteilung eines Elektrolyten innerhalb der Umhüllung auswirken. Im Rahmen einer Herstellung einer erfindungsgemäßen Batterie kann nämlich vorgesehen sein, den Elektrolyten in die Umhüllung einzubringen, nachdem eine Baugruppe, die zumindest den Stapel mit den Elektroden und Separatoren sowie das mindestens eine Leitelement umfasst, in die Umhüllung eingebracht wurde. Hierzu kann die Umhüllung eine entsprechende Einfüllöffnung aufweisen. Dabei kann insbesondere auch vorgesehen sein, dass die Umhüllung in einem Abschnitt ihrer Seite, vorzugsweise Längsseite, der an das mindestens eine Leitelement angrenzt, eine Einfüllöffnung aufweist und/oder ein Überdruckventil integriert. Ein solches Überdruckventil kann dazu dienen, einen Überdruck zu entlasten, der sich bei der Nutzung der Batterie infolge einer Schädigung, die zu einer Gasentwicklung führt, ausgebildet hat. Die vorzugsweise vorgesehene mindestens eine Durchgangsöffnung des Leitelements kann dabei vorteilhaft ein Abführen des Gases zu dem Überdruckventil ermöglichen. Ein solches Überdruckventil kann eine Durchtrittsöffnung nutzen, die auch als Einfüllöffnung dient. Gemäß einer besonders vorteilhaften Ausgestaltungsform kann ein solches Überdruckventil als Berstventil ausgestaltet sein, das beim Erreichen eines definierten Überdrucks gezielt versagt und dabei zerstört wird. Insbesondere kann ein solches Berstventil als Berstfolie, die in einem intakten Zustand eine Durchtrittsöffnung der Umhüllung überdeckt, ausgestaltet sein.

Für eine möglichst sichere Nutzung einer erfindungsgemäßen Batterie kann vorgesehen sein, dass mindestens einer der Batteriepole elektrisch von der Umhüllung isoliert ist, so dass möglichst kein Stromfluss zwischen diesen Komponenten erfolgen kann.

Weiterhin kann vorgesehen sein, dass einer der Batteriepole hochohmig mit der Umhüllung verbunden ist. Als "hochohmig" gilt eine elektrische Verbindung, die einen ohmschen Widerstand von zwischen 1 kΩ und 100 MΩ bewirkt. Dies ermöglicht, einen elektrischen Potentialausgleich zwischen der Umhüllung und dem entsprechenden Batteriepol beziehungsweise den damit elektrisch verbundenen Elektroden zu realisieren, ohne dass dabei ein relevant großer Stromfluss zwischen diesen Komponenten erfolgen würde. Durch einen solchen Potentialausgleich kann eine Korrosion der Umhüllung, die insbesondere aufgrund einer chemischen Wechselwirkung mit dem innerhalb der Umhüllung aufgenommen Elektrolyten bei einer Potentialdifferenz auftreten könnte, vermieden werden. Dies gilt insbesondere, wenn die Umhüllung, wie es vorzugsweise vorgesehen ist, zumindest innenseitig aus einem Metall und insbesondere Aluminium ausgestaltet ist. Die hochohmige Verbindung kann dabei besonders bevorzugt zwischen der Umhüllung und demjenigen der Batteriepole, der mit denjenigen Elektroden elektrisch verbunden ist, die ein kathodisch wirksames Aktivmaterial aufweisen, ausgebildet sein.

Bei einer erfindungsgemäßen Batterie kann es sich insbesondere um eine Traktionsbatterie oder einen Teil einer solchen Traktionsbatterie für ein Kraftfahrzeug handeln. Mittels einer solchen Traktionsbatterie kann einem elektrischen Traktionsmotor des Kraftfahrzeugs, der eine Antriebsleistung des Kraftfahrzeugs bereitstellt, elektrische Energie zur Verfügung gestellt werden.

Als "Folie" gilt erfindungsgemäß ein Körper, dessen Länge und Breite (die die Großflächen der Folie begrenzen) um ein Vielfaches größer als dessen Höhe (d.h. die Folienstärke) ist, wobei die Höhe vorzugsweise maximal 1/100 oder 1/500 oder 1/1000 oder 1/10000 oder 1/100000 oder 1/1000000 der Länge und/oder der Breite der Folie entsprechen kann. Insbesondere kann eine Folie mit einer so geringen Folienstärke dimensioniert sein, dass diese bei ebener Ausbreitung ohne Abstützung durch die eigene Gewichtskraft erkennbar deformiert würde beziehungsweise kollabiert.

Die Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: eine erfindungsgemäße Batterie gemäß einer ersten Ausgestaltungsform in einem Längsschnitt in Kombination mit zwei Kühlelementen;
- Fig. 2:: eine Aufsicht auf eine erste Elektrode der Batterie;
- Fig. 3:: eine Aufsicht auf eine zweite Elektrode der Batterie;
- Fig. 4:: ein Stapel mit den Elektroden und Separatoren der Batterie in einem Längsschnitt;
- Fig. 5:: ein Grundgehäuse der Batterie in einer perspektivischen Darstellung;
- Fig. 6:: eine Baugruppe, die den Stapel mit den Elektroden und Separatoren sowie ein Leitelement der Batterie umfasst;
- Fig. 7:: einen Querschnitt durch einen Abschnitt der Baugruppe;
- Fig. 8:: ein Einbringen der Baugruppe in das Grundgehäuse im Rahmen der Herstellung der Batterie;
- Fig 9:: eine erfindungsgemäße Batterie gemäß einer zweiten Ausgestaltungsform in einem Längsschnitt in Kombination mit zwei Kühlelementen;
- Fig. 10:: eine Aufsicht auf eine erste Elektrode der Batterie;
- Fig. 11:: eine erfindungsgemäße Batterie gemäß einer dritten Ausgestaltungsform in einem Längsschnittkombination mit zwei Kühlelementen; und
- Fig. 12:: eine Aufsicht auf eine zweite Elektrode der Batterie.

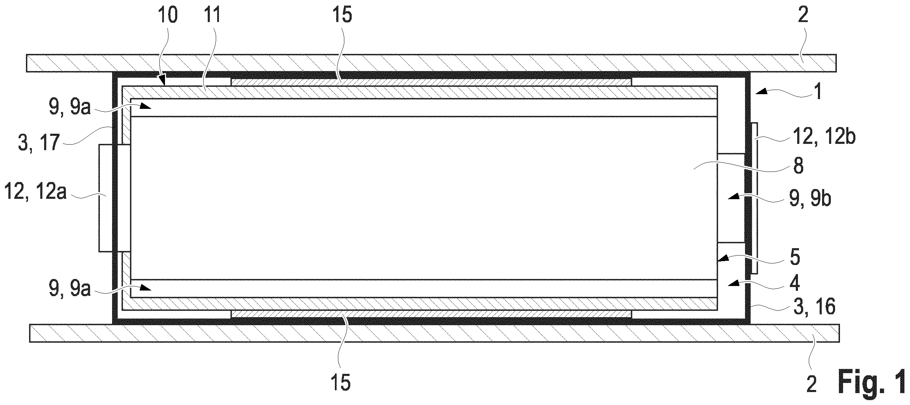

Die Fig. 1 zeigt eine erfindungsgemäße Batterie 1 in Kombination mit zwei Kühlelementen 2. Die Kühlsysteme kontaktieren die Batterie 1, die eine Umhüllung in Form eines quaderförmigen Gehäuses 3 aufweist, an jeweils einer Längsseite. Die Kühlelemente 2 können beispielsweise in ein Kühlsystem (nicht dargestellt), in dem ein Kühlmittel zirkuliert, integriert sein. Dabei können die Kühlelemente 2 selbst auch von dem Kühlmittel durchströmt sein. Mittels der Kühlelemente kann eine vorteilhafte Temperierung der dargestellten Batterie oder mehrerer solcher Batterien realisiert werden. Dabei kann vorgesehen sein, dass jeweils ein Kühlelement 2 zwischen zwei erfindungsgemäßen Batterien 1 angeordnet ist.

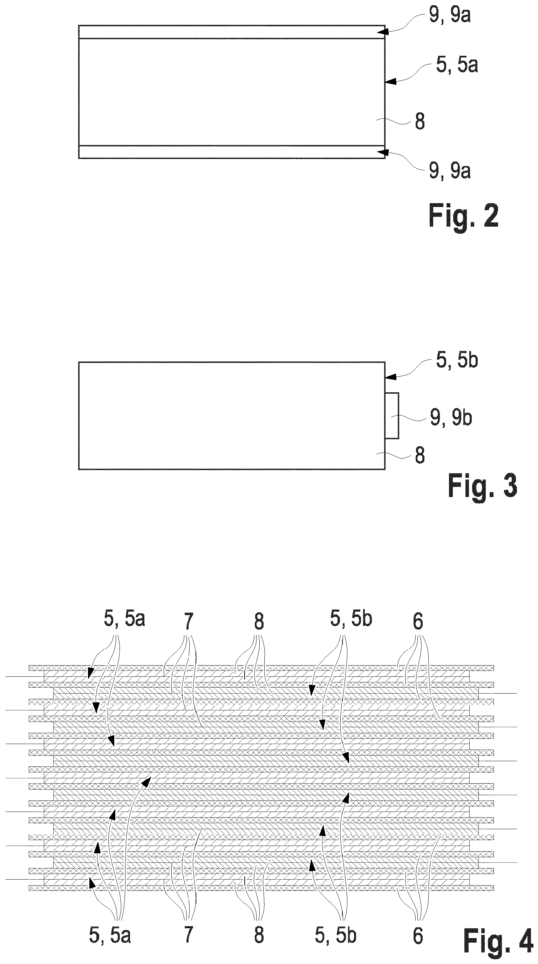

Die dargestellte Batterie 1 umfasst neben dem Gehäuse 3 einen innerhalb des Gehäuses 3 angeordneten Stapel 4 mit Elektroden 5 und Separatoren 6, wie er in weiteren Details in der Fig. 4 dargestellt ist. Während in der Fig. 4 eine Stapelrichtung des Stapels 4 parallel zur Zeichenebene verläuft, ist diese in der Fig. 1 senkrecht bezüglich der Zeichenebene ausgerichtet.

Der Stapel 4 umfasst in abwechselnder Reihenfolge die quaderförmigen, dünnen (d.h. mit geringer Höhe ausgestalteten) Elektroden 5 und die ebenfalls quaderförmigen, dünnen sowie elektrisch isolierend ausgestalteten Separatoren 6. Die Elektroden 5 liegen dabei in dem Stapel 4 wiederum abwechselnd als erste Elektroden 5a, die bei einem Entladen der Batterie 1 als Kathoden fungieren, und als zweite Elektroden 5b, die bei einem Entladen der Batterie 1 als Anoden fungieren, vor. Die Separatoren 6 können so ausgestaltet sein, dass diese auch als Festelektrolyt dienen, oder diese sind im gebrauchsfähigen Zustand der Batterie 1 mit einem flüssigen Elektrolyt (nicht dargestellt) getränkt. Die zentrierte Stapelung der quaderförmigen Elektroden 5 und Separatoren 6 führt zu einem Stapel 4, der ebenfalls angenähert eine Quaderform aufweist, die an die Quaderform des Gehäuses 3 angepasst ist. Dabei sind geringe Überstände zwischen den verschiedenen Elementen des Stapels 4 und insbesondere eine umfangsseitig etwas größere Ausgestaltung der Separatoren 6 im Vergleich zu den Elektroden 5 bewusst vorgesehen, um eine hinreichende Separierung der Elektroden 5 auch bei Ungenauigkeiten in der Stapelung dieser Elemente zu gewährleisten.

Die Elektroden 5 umfassen jeweils ein folienartiges Substrat 7 aus einem elektrisch leitfähigen Material, beispielsweise einem Metall, das in einem Abschnitt beidseitig mit jeweils einer Schicht aus einem anodisch oder kathodisch wirksamen Aktivmaterial (Aktivmaterialschichten) 8 versehen ist, während mindestens ein unbeschichteter Abschnitt jedes Substrats 7 jeweils einen zu der jeweiligen Elektrode 5 gehörenden Ableiter darstellt. Ein solcher unbeschichteter Abschnitt jedes Substrats 7 stellt einen Überstand 9 bezüglich der zugehörigen Aktivmaterialschichten 8 dar. Das Substrat 7 der ersten Elektroden 5a kann vorzugsweise aus Aluminium bestehen, während das Substrat 7 der zweiten Elektroden 5b vorzugsweise aus Kupfer und/oder Nickel und/oder Aluminium ausgestaltet sein kann.

Die Substrate 7 der ersten Elektroden 5a bilden an beiden ihrer Längsseiten der zugehörigen Aktivmaterialschichten 8 jeweils einen Querüberstand 9a aus, wobei sich diese Querüberstände 9a jeweils über die gesamte Länge der ersten Elektroden 5a erstrecken (vgl. auch Fig. 2). Die Substrate 7 der zweiten Elektroden 5b bilden dagegen lediglich an einer Stirnseite einen Längsüberstand 9b aus, der sich nicht über die gesamte Breite der jeweiligen zweiten Elektrode 5b erstreckt (vgl. Fig. 3).

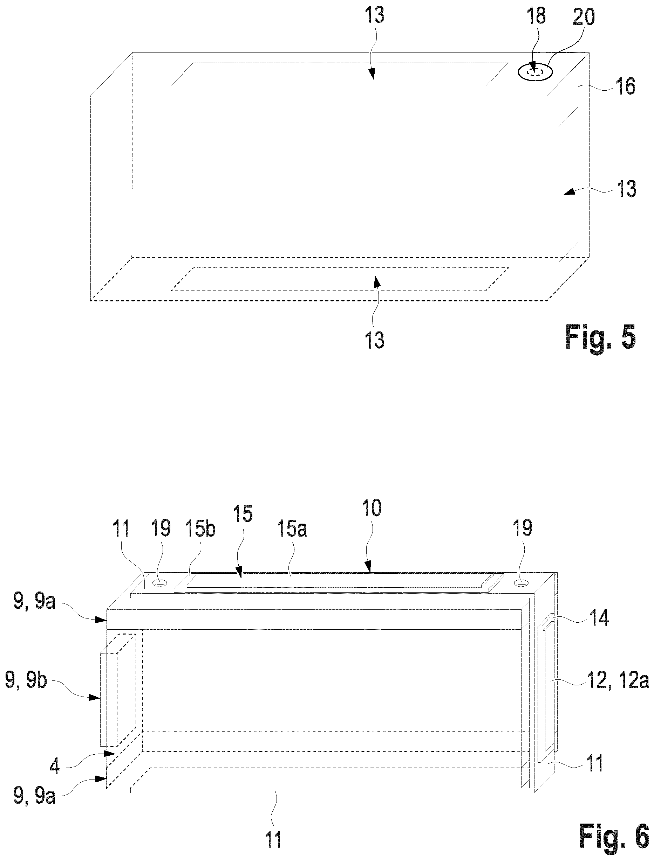

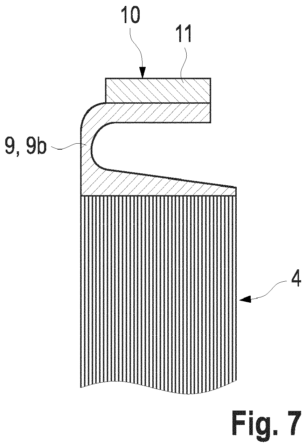

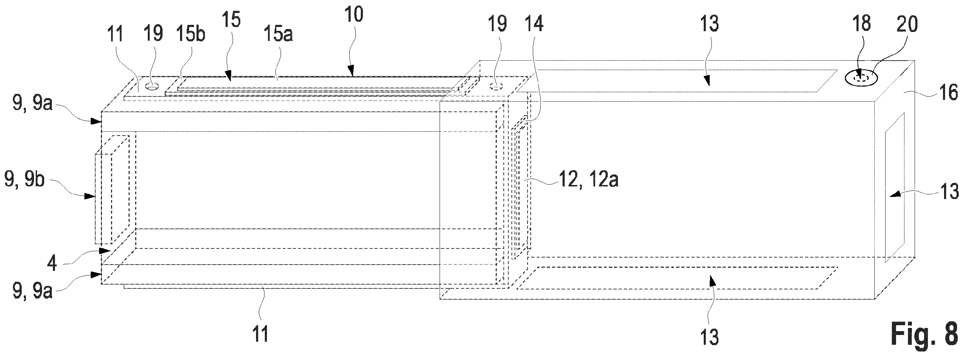

Die beidseitigen Querüberstände 9a sämtlicher der ersten Elektroden 5a sind gruppiert mit einem Leitelement 10 fest verbunden (vgl. Fig. 7). Dieses Leitelement 10 ist in der Fig. 6 in weiteren Details dargestellt. Die Verbindung zwischen den Querüberständen 9a und dem Leitelement 10 kann insbesondere stoffschlüssig, beispielsweise durch Verschweißen, realisiert sein. Das Leitelement 10 umfasst ein U-förmiges erstes Teilelement 11, das (ggf. mehrteilig) vollständig aus Metall, insbesondere Aluminium, ausgestaltet sein kann. Dieses erste Teilelement 11 dient primär als elektrischer Leiter und verbindet dazu elektrisch die beidseitigen Querüberstände 9b der Substrate 7 der ersten Elektroden 5a mit einem ersten (12a) von zwei Batteriepolen 12 der Batterie 1. Der erste Batteriepol 12a ist integraler Bestandteil des Leitelements 10 beziehungsweise dieser ist auch dann schon mit dem ersten Teilelement 11 des Leitelements 10 fest verbunden, bevor dieses in Kombination mit dem Stapel 4 in das Gehäuse 3 eingebracht wird (vgl. Fig. 8). Nach dem Einbringen der entsprechenden Baugruppe, die den Stapel 4 mit den Elektroden 5 und Separatoren 6 sowie das Leitelement 10 umfasst, in das Gehäuse 3, ragt der erste Batteriepol 12 durch eine umfangsseitig geringfügig größer dimensionierte Durchgangsöffnung 13 des Gehäuses 3 (vgl. Fig. 5 und 8), ohne jedoch das Gehäuse 3 direkt zu kontaktieren. Ein rahmenförmiges Dichtelement 14, das den ersten Batteriepol 12a umgibt, sorgt für eine Abdichtung des Spalts, der umfangsseitig dieser Durchgangsöffnung zwischen dem Gehäuse 3 und dem ersten Teilelement 11 des Leitelements ausgebildet ist.

Das Leitelement 10 umfasst weiterhin zwei zweite Teilelemente 15, die jeweils mit einem Abschnitt des ersten Teilelements 11, der eine der Längsseiten des Stapels 4 überdeckt, direkt kontaktierend fest verbunden sind. Die zweiten Teilelemente 15 umfassen jeweils einen ersten Abschnitt 15a , der vorzugsweise aus Metall und insbesondere Aluminium ausgestaltet sein kann und der das erste Teilelement 11 direkt kontaktiert. Vergleichbar zu dem ersten Batteriepol 12a ragt der erste Abschnitt 15a jedes zweiten Teilelements 15 des Leitelements 10 in eine umfangsseitig geringfügig größer dimensionierte Durchgangsöffnung 13 des Gehäuses 3, ohne dieses direkt zu kontaktieren. Ein rahmenförmiger zweiter Abschnitt 15b jedes der zweiten Teilelemente 15 sorgt für eine Abdichtung des Spalts, der umfangsseitig der zugeordneten Durchgangsöffnung 13 zwischen dem Gehäuse 3 und dem ersten Teilelement 11 des Leitelements ausgebildet ist, und überbrückt dabei einen Abstand zwischen dem ersten Teilelement 11 des Leitelements 10 und dem Gehäuse 3.

Grundsätzlich könnten die ersten Abschnitte 15a der zweiten Teilelemente 15 des Leitelements 10, die aufgrund ihrer Anordnung innerhalb jeweils einer Durchgangsöffnung 13 des Gehäuses 3 von außen zugänglich sind, auch als (erste) Batteriepole 12a der Batterie dienen. Genutzt werden diese jedoch ausschließlich als thermische Leiter, die durch einen direkten Kontakt mit jeweils einem der Kühlelemente 2 eine gute Leitung von Wärmeenergie aus der Batterie 1 oder auch in die Batterie 1 (zur bedarfsweise Erwärmung) ermöglichen. Der großflächige Kontakt der Substrate 7 der ersten Elektroden 5a mit dem Leitelement 10 sorgt dabei für eine gute Wärmeleitung aus dem Inneren oder in das Innere des Stapels 4.

Sowohl das den ersten Batteriepol 12a umgebende Dichtelement 14 als auch die zweiten Abschnitte 15b der zweiten Teilelemente 15 des Leitelements 10 sind jeweils entweder aus einem elektrisch isolierend wirkenden oder einem hochohmigen Material ausgestaltet.

Bevorzugt ist eine hochohmige Ausgestaltung für zumindest eines dieser Elemente, um einen elektrischen Potentialausgleich zwischen den ersten Elektroden 5a und dem Gehäuse 3 zu realisieren. Dadurch kann eine Korrosion des Gehäuses 3 aufgrund einer elektrochemischen Wechselwirkung mit dem Elektrolyten vermieden werden.

Das Leitelement 10 und konkret das starr ausgeführte erste Teilelement 11 davon überdeckt die angrenzenden Längs- und Stirnseiten des Stapels 4 jeweils zu mindestens 50%. Dadurch kann das Leitelement 10 den Stapel 4 mit den Elektroden 5 und Separatoren 6 vorteilhaft im Rahmen der Montage der Batterie 1 stabilisieren. Zudem kann dieses vorteilhaft als Führungselement bei einem Einbringen der Baugruppe mit diesen Komponenten in das Gehäuse 3 dienen. Ein solches Einbringen kann gemäß der Fig. 8 durch ein Einschieben der Baugruppe in ein Grundgehäuse 16 des Gehäuses 3, das an einer seiner Stirnseiten offen ausgestaltet ist, erfolgen. Das Leitelement 10 beziehungsweise konkret die Außenseiten der ersten Abschnitte 15a der zweiten Teilelemente 15 können dabei das Grundgehäuse 16 innenseitig kontaktieren beziehungsweise an diesem entlang gleiten, um als Führungselement zu dienen. Die offene Stirnseite des Grundgehäuses 16 wird nach dem Einbringen der Baugruppe mit dem Stapel 4 und dem Leitelement 10 mittels eines Gehäusedeckels 17 verschlossen.

Nach dem Verschließen des Gehäuses 3 mittels des Gehäusedeckels 17 kann vorgesehen sein, den Elektrolyt in das Gehäuse 3 einzubringen. Hierzu kann das Gehäuse 3 an einer seiner Längsseiten eine entsprechende Einfüllöffnung 18 (vgl. Fig. 5 und 8) aufweisen. Nach dem Einbringen des Elektrolyten kann diese Einfüllöffnung 18 verschlossen werden. Hierzu kann beispielsweise eine die Einfüllöffnung 18 überdeckende Folie 20 stoffschlüssig an dem Gehäuse befestigt werden. Diese Folie kann weiterhin derart ausgestaltet sein, dass diese bei dem Erreichen eines definierten Überdrucks innerhalb des Gehäuses 3 reißt und folglich ein Überdruckventil ausbildet.

Um eine gute Verteilung des über die Einfüllöffnung 18 in das Gehäuse 3 eingebrachten Elektrolyten zu gewährleisten, weist das Leitelement 10 zumindest in demjenigen Abschnitt, der an die die Einfüllöffnung 18 integrierende Längsseite des Gehäuses 3 angrenzt, mehrere Durchgangsöffnungen 19 auf. Die Separatoren 6 werden mit dem Elektrolyten getränkt. Dadurch quellen diese in einem gewissen Maße auf, wodurch sich die Abmessungen des Stapels 4 vergrößern. Dies gilt insbesondere für die Höhe des Stapels 4, in geringerem Maße aber auch für die Länge und die Breite. Diese Vergrößerung der Abmessungen des Stapels 4 sorgen für eine im Wesentlichen spielfreie Aufnahme des Stapels 4 innerhalb des Gehäuses 3 und zudem für eine Anordnung der zweiten Abschnitte 15 b der zweiten Teilelemente 15 in den entsprechenden Gehäuseöffnungen 13.

Die Längsüberstände 9b der Substrate 7 sämtlicher der zweiten Elektroden 5b sind gruppiert mit einem zweiten Batteriepol 12b der Batterie 1 elektrisch verbunden. Dieser zweite Batteriepol 12b kann fest in den Gehäusedeckel 17 integriert sein, wobei eine elektrische Isolierung zwischen dem zweiten Batteriepol 12b und dem Gehäusedeckel 17 vorgesehen ist. Die elektrische Verbindung zwischen den Längsüberständen 9b der Substrate 7 der zweiten Elektroden 5b und dem zweiten Batteriepol 12b kann im Rahmen der Montage der Batterie 1 nach dem Einbringen der Baugruppe mit dem Stapel 4 und dem Leitelement 10 in das Grundgehäuse 16 und vor dem Anbringen des Gehäusedeckels 17 erfolgen. Die Längsüberstände 9b der Substrate 7 und der zweite Batteriepol 12b können dazu vorzugsweise stoffschlüssig miteinander verbunden, beispielsweise verschweißt werden.

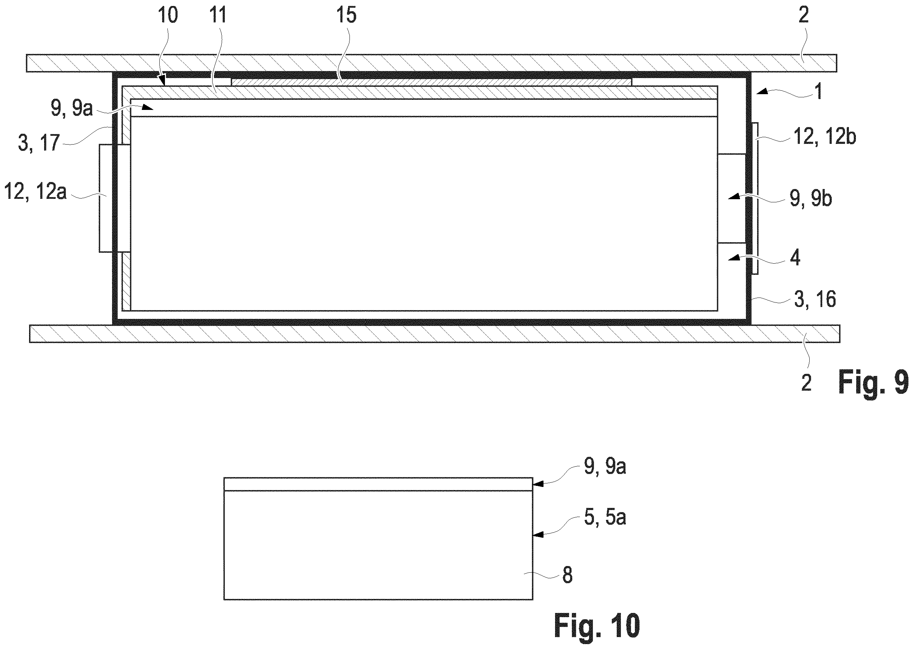

Die Fig. 9 zeigt eine Ausgestaltungsform einer erfindungsgemäßen Batterie 1, die sich von derjenigen gemäß der Fig. 1 dahingehend unterscheidet, dass das Leitelement 10 und konkret das erste Teilelement 11 davon L-förmig ausgestaltet ist. Dazu passend bilden die Substrate 7 der ersten Elektroden 5a lediglich an einer ihrer Längsseiten Querüberstände 9a aus (vgl. auch Fig. 10), die mit dem Leitelement 10 verbunden sind.

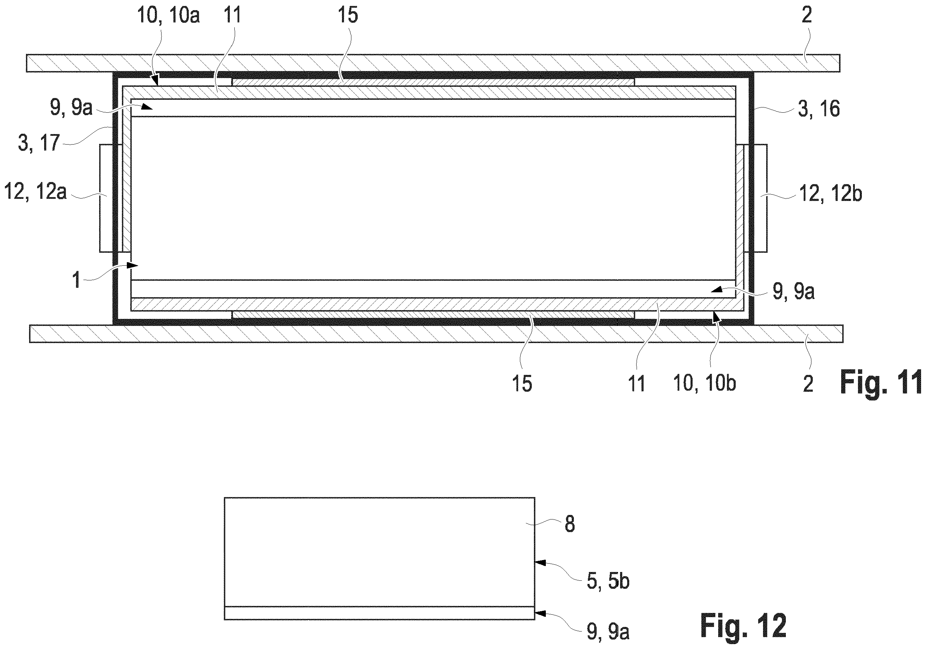

Die erfindungsgemäße Batterie 1 gemäß der Fig. 11 umfasst zwei L-förmige Leitelemente 10, von denen ein erstes (10a) gemäß der Fig. 9 mit Querüberständen 9a, die die Substrate 7 der ersten Elektroden 5a an einer ihrer Längsseiten ausbilden, verbunden ist. Vergleichbar dazu bilden bei der Batterie gemäß der Fig. 11 auch die Substrate 7 der zweiten Elektroden 5b an jeweils einer Längsseite einen Querüberstand 9a aus (vgl. Fig. 12), wobei die Querüberstände 9a der ersten Elektroden 5a einerseits und der zweiten Elektroden 5b andererseits an gegenüberliegenden der Längsseiten der Elektroden 5 beziehungsweise des Stapels 4 mit den Elektroden 5 und Separatoren 6 angeordnet sind. Die Querüberstände 9a der zweiten Elektroden 5b sind mit einem zweiten (10b) der Leitelemente 10 verbunden. Dieses zweite Leitelement 10b kann strukturell dem ersten Leitelement 10a entsprechen und dabei auch den zweiten Batteriepol 12b integrieren. Gegebenenfalls können sich diese aber auch zumindest bezüglich der verwendeten Materialien unterscheiden. Beispielsweise kann vorgesehen sein, dass zumindest das erste Teilelement 11 des zweiten Leitelement 10b aus Kupfer hergestellt ist, während das erste Teilelement 11 des ersten Leitelements 10a aus Aluminium ausgestaltet sein kann.

### BEZUGSZEICHENLISTE

- 1: Batterie
- 2: Kühlelement
- 3: Gehäuse
- 4: Stapel
- 5: Elektrode
- 5a: erste Elektrode
- 5b: zweite Elektrode
- 6: Separator
- 7: Substrat
- 8: Aktivmaterialschicht
- 9: Überstand des Substrats
- 9a: Querüberstand
- 9b: Längsüberstand
- 10: Leitelement
- 10a: erstes Leitelement
- 10b: zweites Leitelement
- 11: erstes Teilelement des Leitelements
- 12: Batteriepol
- 12a: erster Batteriepol
- 12b: zweiter Batteriepol
- 13: Durchgangsöffnung des Gehäuses
- 14: Dichtelement
- 15: zweites Teilelement des Leitelements
- 15a: erster Abschnitt des zweiten Teilelements
- 15b: zweiter Abschnitt des zweiten Teilelements
- 16: Grundgehäuse
- 17: Gehäusedeckel
- 18: Einfüllöffnung
- 19: Durchgangsöffnung des Leitelements
- 20: Folie

## Patentansprüche

1. Batterie (1) mit einer Umhüllung und mit einem innerhalb der Umhüllung angeordneten Stapel (4) mit mehreren ersten Elektroden (5a) und mehreren zweiten Elektroden (5b), die in dem Stapel (4) unter Zwischenanordnung jeweils eines Separators (6) wechselweise angeordnet sind, wobei die ersten Elektroden (5a) mit einem ersten Batteriepol (12a), der in die Umhüllung integriert ist, elektrisch verbunden sind und die zweiten Elektroden (5b) mit einem zweiten Batteriepol (12b), der in die Umhüllung integriert ist, elektrisch verbunden sind und wobei die Elektroden (5) jeweils ein elektrisch leitfähiges Substrat (7) und an mindestens einer Seite des Substrats (7) eine Aktivmaterialschicht (8) aufweisen, **dadurch gekennzeichnet, dass** die Substrate (7) der ersten Elektroden (5a) und/oder der zweiten Elektroden (5b) an mindestens einer Seite der jeweils mindestens einen zugehörigen Aktivmaterialschicht (8) einen Querüberstand (9a) ausbilden, wobei die Querüberstände (9a) der Substrate (7) der ersten Elektroden (5a) und/oder die Querüberstände (9a) der Substrate (7) der zweiten Elektroden (5b) mit einem thermisch leitfähigen Leitelement (10) verbunden sind, wobei das mindestens eine Leitelement (10) die Umhüllung kontaktiert und/oder einen Abschnitt davon ausbildet.

2. Batterie (1) gemäß Anspruch 1, **dadurch gekennzeichnet, dass** das mindestens eine Leitelement (10) elektrisch mit einem zugehörigen der Batteriepole (12) verbunden ist.

3. Batterie (1) gemäß Anspruch 2, **dadurch gekennzeichnet, dass** das mindestens eine Leitelement (10) den zugehörigen Batteriepol (12) integriert.

4. Batterie (1) gemäß Anspruch 2 oder 3, **dadurch gekennzeichnet, dass** das mindestens eine Leitelement (10) ein erstes Teilelement (11) umfasst, das mit dem zugehörigen Batteriepol (12) elektrisch verbunden ist, und ein zumindest abschnittsweise elektrisch isolierend oder hochohmig wirkendes zweites Teilelement (15) umfasst, das einen Abstand zwischen dem ersten Teilelement (11) und der Umhüllung überbrückt.

5. Batterie (1) gemäß einem der vorhergehenden Ansprüche, **dadurch gekennzeichnet, dass** das Leitelement (10) abschnittsweise in einer Durchgangsöffnung (13) der Umhüllung angeordnet ist.

6. Batterie (1) gemäß Anspruch 5, **dadurch gekennzeichnet, dass** das Leitelement (10) einen in der Durchgangsöffnung (13) der Umhüllung angeordneten ersten Abschnitt (15a) und einen die Umhüllung innenseitig kontaktierenden, elektrisch isolierend oder hochohmig wirkenden und/oder gegen einen Gasdurchtritt abdichtenden zweiten Abschnitt (15b) umfasst.

7. Batterie (1) gemäß einem der vorhergehenden Ansprüche, **dadurch gekennzeichnet, dass** die Substrate (7) der ersten Elektroden (5a) an einer Seite der jeweils zumindest einen zugehörigen Aktivmaterialschicht (8) einen Längsüberstand (9b) ausbilden, wobei die Längsüberstände (9b) der Substrate (9) der ersten Elektroden (5a) mit dem ersten Batteriepol (12a), der in eine angrenzende Stirnseite der Umhüllung integriert ist, elektrisch verbunden sind und/oder dass die Substrate (7) der zweiten Elektroden (5b) an einer Seite der jeweils zumindest einen zugehörigen Aktivmaterialschicht (8) einen Längsüberstand (9b) ausbilden, wobei die Längsüberstände (9b) der Substrate (7) der zweiten Elektroden (5b) mit dem zweiten Batteriepol (12b), der in eine angrenzende Stirnseite der Umhüllung integriert ist, elektrisch verbunden sind.

8. Batterie (1) gemäß Anspruch 7, **dadurch gekennzeichnet, dass** die Substrate (7) der ersten Elektroden (5a) an zwei Längsseiten der jeweils zumindest einen zugehörigen Aktivmaterialschicht (8) einen Querüberstand (9a) ausbilden, wobei die Querüberstände (9a) mit dem Leitelement (10) oder mit jeweils einem Leitelement (10) verbunden sind, und die Substrate (7) der zweiten Elektroden (5b) den Längsüberstand (9b) ausbilden.

9. Batterie (1) gemäß einem der vorhergehenden Ansprüche, **dadurch gekennzeichnet, dass** die ersten Elektroden (5a) ein kathodisch wirksames Aktivmaterial und/oder ein Substrat aus Aluminium aufweisen.

10. Batterie (1) gemäß einem der vorhergehenden Ansprüche, **dadurch gekennzeichnet, dass** das mindestens eine Leitelement (10) starr ausgestaltet ist.

11. Batterie (1) gemäß einem der vorhergehenden Ansprüche, **dadurch gekennzeichnet, dass** das mindestens eine Leitelement (10) eine zugeordnete Seite des Stapels (4) zu mindestens 50% oder mindestens 75% überdeckt.

12. Batterie (1) gemäß einem der vorhergehenden Ansprüche, **dadurch gekennzeichnet, dass** das mindestens eine Leitelement (10) mindestens eine Durchgangsöffnung (19) aufweist.

13. Batterie (1) gemäß einem der vorhergehenden Ansprüche, **dadurch gekennzeichnet, dass** die Umhüllung in einem Abschnitt, der an das mindestens eine Leitelement (10) angrenzt, eine Einfüllöffnung (18) aufweist und/oder ein Überdruckventil integriert.

14. Batterie (1) gemäß einem der vorhergehenden Ansprüche, **dadurch gekennzeichnet, dass** mindestens einer der Batteriepole (12) elektrisch von der Umhüllung isoliert ist.

15. Batterie (1) gemäß einem der vorhergehenden Ansprüche, **dadurch gekennzeichnet, dass** mindestens einer der Batteriepole (12) hochohmig mit der Umhüllung verbunden ist.
